Europäisches Patentamt

European Patent Office

Office européen des brevets

(11) Numéro de publication: **0 370 845**

**A1**

## (12) DEMANDE DE BREVET EUROPEEN

(21) Numéro de dépôt: 89402939.6

(51) Int. Cl.⁵: **H04L 12/42**

(22) Date de dépôt: 25.10.89

(30) Priorité: 25.10.88 FR 8813923

(43) Date de publication de la demande:
**30.05.90 Bulletin 90/22**

(84) Etats contractants désignés:
**BE DE GB IT NL SE**

(71) Demandeur: **MATRA COMMUNICATION**
**50, rue du Président Sadate**
**F-29100 Quimper(FR)**

(72) Inventeur: **Heim, François**
**Cabinet Ballot-Schmit 7, rue Le Sueur**
**F-75116 Paris(FR)**

(74) Mandataire: **Ballot, Paul Denis Jacques et al**
**Cabinet Ballot-Schmit 7, rue le Sueur**
**F-75116 Paris(FR)**

(54) **Réseau en anneau comportant une boucle de secours.**

(57) Réseau de communication du type en anneau comportant au moins une première boucle (A, B) de transmission reliant différentes Unités de Contrôle de Grappe (UCG - 3, 4, 5, 6, 8) auxquelles sont connectés les différents abonnés du réseau, caractérisé en ce qu'il comprend une deuxième boucle de transmission dite boucle de secours (S) qui connecte les différentes UCG entre elles, et qui présente un sens de transmission inverse de celui de la première boucle.

FIG_1

# RESEAU EN ANNEAU COMPORTANT UNE BOUCLE DE SECOURS

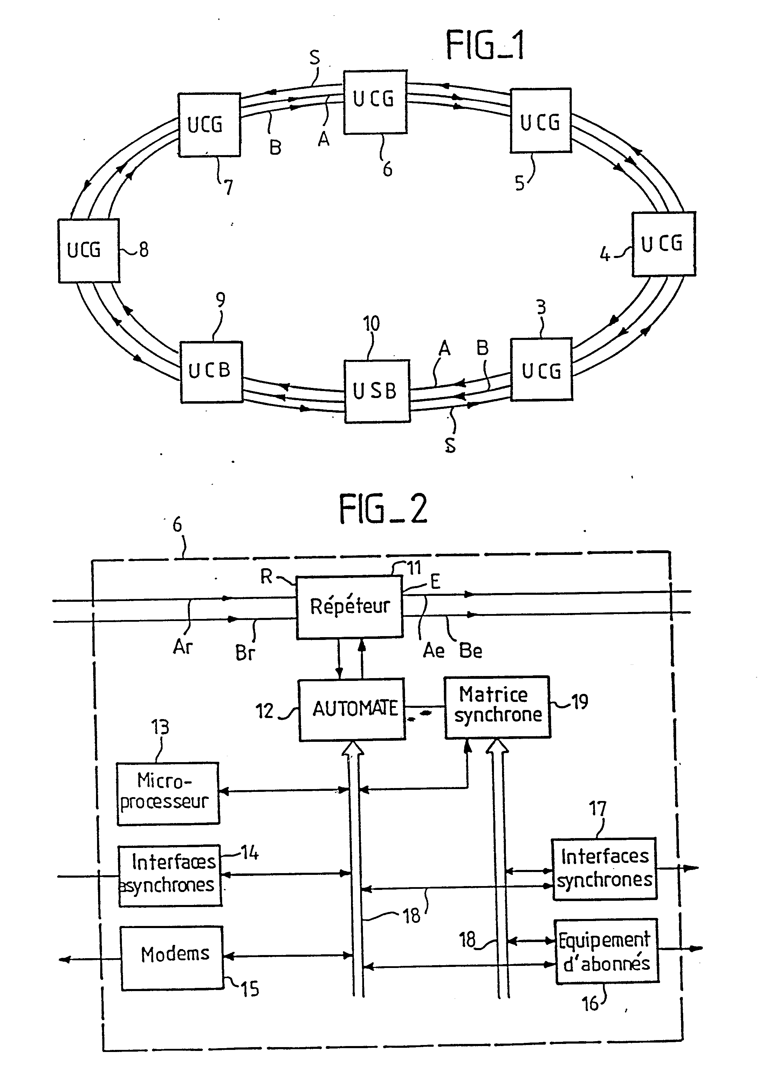

L'invention concerne les réseaux de communication du type dans lequel les données sont transportées dans une trame temporelle circulant dans un anneau ou boucle. Un tel réseau en anneau est par exemple décrit dans la revue COMMUTATION ET TRANSMISSION N° 1 - 1984 pages 49 à 60. Il met en oeuvre, comme le montre la figure 1, des unités de contrôle de Grappe (UCG) ou stations 3 à 8 dont chacune est reliée à la précédente et à la suivante par une liaison numérique unidirectionnelle A et/ou B de manière à réaliser une boucle. Chaque utilisateur du réseau mettant en oeuvre un terminal, un ordinateur ou un poste téléphonique, est relié à une de ces unités UCG et communique par l'intermédiaire de la boucle avec les autres utilisateurs. Le raccordement des utilisateurs s'effectue en étoile à partir des unités UCG sur des paires téléphoniques.

Les informations sont transmises dans l'anneau ou boucle selon un procédé de multiplexage temporel qui consiste, par exemple, en une trame de 128 intervalles de temps d'un octet chacun qui est émise toutes les 125 microsecondes. Chaque trame est organisée de la façon suivante :
- l'intervalle de temps 0 est affecté à un code de synchronisation;
- les intervalles de temps 1 à N sont alloués aux échanges en modes paquets et constituent un canal paquet unique;
- les intervalles de temps N + 1 à N + C sont alloués aux communications téléphoniques, à raison d'un intervalle de temps par communication;
- les intervalles de temps N + C + 1 à 127 sont alloués à des transmissions de données synchrones par intervalle de temps.

Chaque section ou UCG de la boucle reçoit la trame temporelle en provenance de la station précédente, en extrait les informations qui lui sont destinées, y insère les informations qu'elle adresse à d'autres stations, puis émet à son tour la trame sur la section suivante. Une trame doit faire un tour complet de la boucle en 125 microsecondes exactement afin d'assurer la synchronisation de l'ensemble des stations. Cette synchronisation est réalisée par une station particulière appelée Unité de Synchronisation de Boucle 10 (USB).

Les 128 intervalles de temps définis ci-dessus sont gérés selon deux méthodes différentes selon qu'il s'agit du canal paquet ou des autres intervalles de temps.

Le canal paquet est un moyen de communication unique mis à la disposition de toutes les stations et son utilisation est régie par une procédure d'accès qui empêche deux stations d'émettre simultanément des paquets. A cet effet, le premier intervalle de temps du paquet contient un octet qui indique à la station qui le reçoit si le reste du canal paquet est occupé par des données utiles ou s'il est libre. Si le canal paquet est occupé, la station ne peut pas émettre dans le canal, mais doit examiner les données qui suivent pour déterminer si elles lui sont adressées. Si le canal paquet est libre, la station peut émettre si elle le désire des données dans ce canal en les faisant précéder de l'octet "occupé". La station ne dispose que d'un temps d'émission limité, c'est-à-dire qu'elle ne peut utiliser le canal paquet que pendant un nombre de trames consécutives limité.

Les intervalles de temps autres que ceux réservés au canal paquet, c'est-à-dire les intervalles N + 1 à 127 sont gérés de manière à permettre une communication entre deux utilisateurs reliés à deux stations différentes. Ceci implique l'immobilisation, pour la durée de la communication, d'un intervalle de temps de la trame qui est temporairement affecté à cette communication.

Les fonctions de supervision globale, d'exploitation et de maintenance sont rassemblées dans une station particulière appelée Unité de Contrôle de Boucle 9 (UCB). C'est dans cette unité que sont assurés la supervision de l'utilisation du canal paquet, sa libération autoritaire au cas où une station défaillante le mobiliserait, la collecte des messages d'erreur émis par l'ensemble des stations et le stockage de l'ensemble des programmes et des données permanents et semi-permanents nécessaires au chargement de toute station du réseau.

Pour maintenir le bon fonctionnement du réseau en présence de défaillance de matériel ou de logiciel, il est prévu :
- le doublement des moyens de transmission ; le support de transmission A qui relie les stations entre elles, est doublé par un support B ; chaque station comporte deux ensembles de circuits de réception et d'émission indépendants, alimentés séparément et capables de s'isoler de la station si celle-ci présente des symptômes de mauvais fonctionnement, auquel cas ils assurent la retransmission pure et simple des signaux reçus de la station précédente vers la station suivante ;
- le doublement de l'Unité de Contrôle de Boucle (UCB) pour assurer la permanence des fonctions de supervision;
- le triplement de l'unité de Synchronisation de Boucle (USB) ;
- la configuration en multiboucles.

Dans la plupart des utilisations d'un tel réseau en boucle, les mesures de sécurité, qui viennent d'être mentionnées, sont suffisantes pour maintenir le bon fonctionnement du réseau en présence des défaillances habituelles. Cependant, dans certaines utilisations comportant un environnement à haut risque, ces mesures sont insuffisantes car elles ne permettent pas de maintenir le fonctionnement lorsque, par exemple, les supports de transmission A et B sont coupés ou qu'une station devient complètement inopérante.

Le but de la présente invention est donc de réaliser un réseau en anneau qui continue à fonctionner en cas de rupture des supports de transmission ou d'arrêt de fonctionnement d'une station UCG.

L'invention se rapporte à un réseau de communication du type en anneau comportant au moins une première boucle A ou B de transmission reliant différentes Unités de Contrôle de Grappe (UCG ) auxquelles sont connectés les différents abonnés du réseau, caractérisé en ce qu'il comprend une boucle de transmission supplémentaire S dite de secours qui connecte les différentes UCG entre elles et qui présente un sens de transmission inverse de celui de la première boucle.

La boucle de secours (S) comprend un module électronique associé à chaque UCG et une ligne de transmission reliant les différents modules électroniques de la boucle.

Le module électronique est également connecté à la première boucle de transmission et comprend des moyens de commutation qui permettent de connecter la première boucle (A ou B) à la boucle de secours (S) lorsqu'une panne du réseau est détectée.

Le module électronique comprend, en outre, des moyens d'analyse de signaux d'alarme fournis par l'UCG associée et par les autres UCG du réseau par l'intermédiaire de la boucle de secours fonctionnant en télémesure. Ce sont ces moyens d'analyse qui élaborent les signaux de commande des moyens de commutation.

Les moyens d'analyse sont connectés à l'UCG associée par des liaisons directes qui transmettent les signaux d'alarme et par des liaisons d'abonnés. D'autres caractéristiques et avantages de la présente invention apparaîtront à la lecture de la description suivante d'un exemple particulier de réalisation, ladite description étant faite en relation avec les dessins joints dans lesquels :

- la figure 1 est un schéma de principe d'un réseau en anneau de l'art antérieur auquel l'invention s'applique;

- la figure 2 est un schéma de principe d'une Unité de Contrôle de Grappe dans le réseau en anneau décrit en relation avec la figure 1;

- la figure 3 est un schéma fonctionnel montrant les connexions d'un module électronique additionnel pour mettre en oeuvre l'invention; et

- la figure 4 est un schéma montrant les éléments fonctionnels du module électronique additionnel selon l'invention.

Le schéma de principe d'un réseau en anneau selon l'art antérieur auquel s'applique l'invention a été décrit dans le préambule en relation avec la figure 1. Comme on l'a indiqué, la sécurité de fonctionnement d'un tel réseau a été améliorée de diverses manières et l'une d'entre elles consiste à doubler la boucle A par une boucle B dans laquelle les signaux circulent dans le même sens que dans la Boucle A.

L'invention propose d'améliorer cette sécurité en ajoutant une troisième boucle ou boucle supplémentaire S, dite boucle de secours, dans laquelle les signaux circulent en sens contraire de celui des boucles A et B. En outre, il est prévu que cette boucle S puisse fonctionner selon deux débits d'information différents, l'un faible en fonctionnement normal et l'autre élevé et égal à celui d'une boucle A ou B en fonctionnement de secours. Bien entendu, les milieux de transmission des différentes boucles A, B et S peuvent être quelconques mais de préférence des lignes coaxiales ou des liaisons optiques sur fibres optiques.

Sur la figure 2, une Unité de Contrôle de Grappe (UCG) comprend un répéteur 11 qui reçoit, côté réception R, les liaisons $A_r$ et $B_r$ provenant de l'UCG en amont sur l'anneau et qui émet, côté émetteur E, sur les liaisons $A_e$ et $B_e$ le connectant à l'UCG en aval sur l'anneau. Les informations qui sont transmises sur les boucles A et B sont triées par un automate 12 qui reconnaît celles qui sont destinées à l'UCG dont il fait partie. Cet automate 12 a également pour fonction d'insérer dans la boucle A ou B les informations que l'UCG veut transmettre à un autre UCG de l'anneau.

Les informations triées par l'automate 12 sont traitées dans un microprocesseur 13 qui détermine la destination finale des informations de données et envoie ces dernières vers leurs destinataires à travers différentes interfaces 14 (asynchrones), 15 (modems), 17 (synchrones), 16 (équipements d'abonnés) etc... A l'intérieur de l'UCG, les informations circulent sur des bus 18 qui relient entre eux les différents éléments constituant l'UCG. signaux synchrones de signalisation sont crées par une matrice synchrone 19 à partir des informations ou signaux triés par l'automate 12.

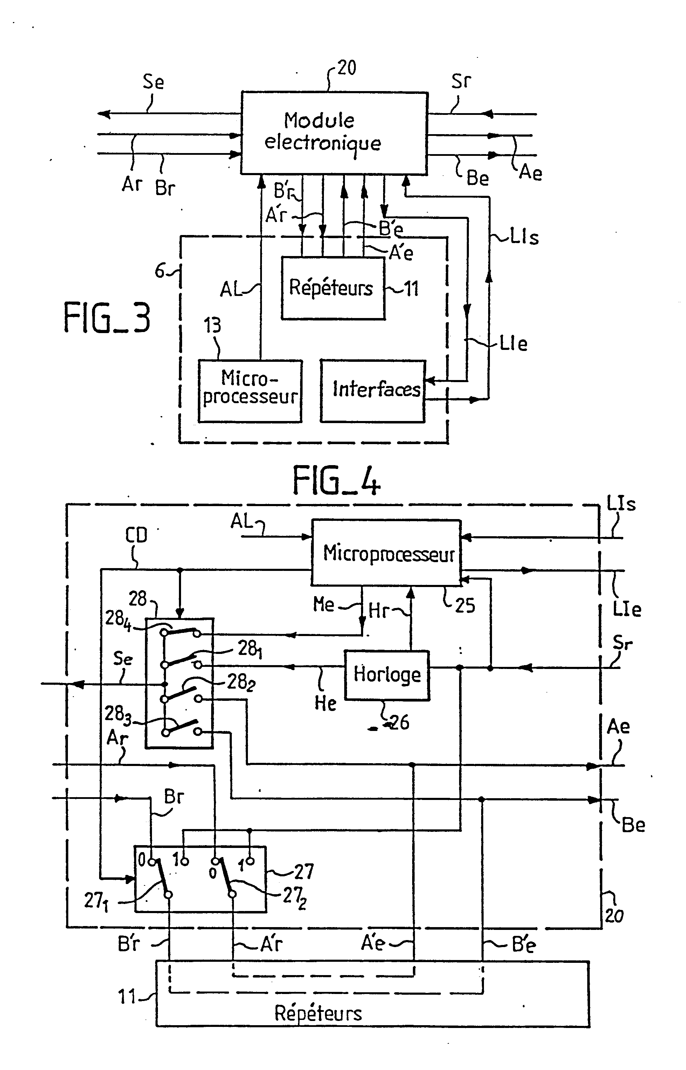

Pour mettre en oeuvre la boucle de secours S selon l'invention, chaque UCG doit être modifiée afin d'y inclure un module électronique additionnel 20 (figure 3) qui est disposé avant le répéteur 11, côté réception, et après ce dernier, côté émission. Ce module électronique 20 est donncté à l'UCG en amont par les liaisons $A_r$ et $B_r$ et par la liaison de secours $S_e$ fonctionnant en émission. Il est connecté à l'UCG en aval par les liaisons $A_e$ et $B_e$ et par la liaison de secours $S_r$ fonctionnant en réception.

Le module additionnel 20 est connecté à l'UCG auquel il est associé par différentes liaisons qui sont référencées :
- $A'_r$ pour la boucle A, côté réception du répéteur 11,
- $B'_r$ pour la boucle B, côté réception du répéteur 11,
- $A'_e$ pour la boucle A, côté émission du répéteur 11,
- $B'_e$ pour la boucle B, côté émission du répéteur 11,
- AL pour transmettre des signaux d'alarme qui sont fournis par le microprocesseur 13 de l'UCG associée,
- $Ll_e$ pour une liaison entrante avec l'UCG associée, et
- $Ll_s$ pour une liaison sortante avec l'UCG associée.

Comme le montre la figure 4, le module électronique additionnel 20 comprend essentiellement un microprocesseur 25, un circuit horloge 26 et deux matrices de commutation 27 et 28.

Le microprocesseur 25 est connecté à l'UCG par trois liaisons, la première AL pour recevoir les signaux d'alarme fournis par le microprocesseur 13 de l'UCG, la deuxième $Ll_s$ pour recevoir des informations ou données en provenance du réseau et la troisième $Ll_e$ pour envoyer des informations ou données au réseau. Pour ces deux dernières liaisons, il se comporte comme un abonné de l'UCG.

Le microprocesseur reçoit également des données sur la liaison $S_r$ et peut en émettre vers $S_e$ par l'intermédiaire de la liaison $M_e$.

Le circuit horloge 26 est connecté à la boucle de secours S et comporte un circuit de réception des signaux arrivant sur la liaison $S_r$ ainsi qu'un circuit d'émission des signaux sur la liaison $S_e$. Il comporte également un circuit de détection des signaux de synchronisation, signaux qui sont utilisés pour le circuit d'émission. Le circuit d'horloge 26 envoie des signaux au microprocesseur 25 par l'intermédiaire de la liaison $H_r$.

Le circuit de commutation 27, également appelé matrice de commutation, est prévu pour effectuer la commutation de transmission à la réception entre l'une des boucles A ou B et la boucle S. Cette matrice est interposée entre les liaisons d'entrée $A_r$ et $B_r$ et les répéteurs 11 de l'UCG dont les entrées sont référencées $A'_r$ et $B'_r$. Un premier commutateur $27_2$ permet de relier l'entrée $A'_r$ soit à la liaison $A_r$ en fonctionnement normal, soit à la liaison de secours $S_r$ en cas de panne. Un deuxième commutateur $27_1$ permet de relier l'entrée $B'_r$ soit à la liaison $B_r$ en fonctionnement normal, soit à la liaison de secours $S_r$ en cas de panne. La position de ces commutateurs est commandée par des signaux fournis par le microprocesseur 25 sur la liaison CD.

Le circuit de commutation 28, également appelé sélecteur, est prévu pour connecter à l'émission la liaison de secours $S_e$ soit à la liaison $M_e$ en fonctionnement normal, soit à l'une des liaisons $A_e$, $B_e$ ou $H_e$ en cas de panne. Ce sélecteur comprend à cet effet quatre interrupteurs, le premier (interrupteur $28_1$) qui permet de connecter $S_e$ à la liaison $S_r$ par l'intermédiaire de la liaison $H_e$ du circuit horloge 26, le deuxième (interrupteur $28_2$) qui permet de connecter $S_e$ à la liaison $A_e$, le troisième (interrupteur $28_3$) qui permet de connecter $S_e$ à la liaison $B_e$ et le quatrième $28_4$ qui permet de connecter $S_e$ à la liaison $M_e$. Les différentes positions du sélecteur sont commandées par des signaux founis par le microprocesseur 25 sur la liaison CD.

Il est à noter que, sur la figure 4, les positions des circuits de commutation correspondent à un fonctionnement normal du réseau. Dans ces positions, les liaisons amont $A_r$ et $B_r$ sont connectées aux liaisons aval $A_e$ et $B_e$ par l'intermédiaire de la matrice de commutation 27, des liaisons $A'_r$ et $B'_r$, des répéteurs 11 de l'UCG et des liaisons $A'_e$ et $B'_e$. Il en résulte que tous les UCG du réseau sont connectées entre elles par les boucles A et B si ces deux boucles sont utilisées simultanément. Ces liaisons sont en général prévues pour permettre de grands débits d'informations, par exemple quarante mégabits par seconde.

Par ailleurs, les différents modules électroniques additionnels du réseau sont connectés entre eux directement par la boucle de secours S. Dans cette boucle de secours, les signaux circulent en sens inverse de celui affecté aux boucles A et B. En fonctionnement normal, les signaux sur cette boucle de secours sont à faible débit, par exemple soixante-quatre kilobits par seconde. Cependant, il est prévu que ce débit puisse atteindre celui de la boucle A ou B en cas de panne. Ceci est obtenu par une liaison entre $S_r$ et $S_e$ par l'intermédiaire du microprocesseur 25 et de l'interrupteur fermé $28_4$ en fonctionnement normal. Les signaux transmis sur cette boucle de secours permettent de la maintenir en état de bon fonctionnement et d'effectuer des télémesures dans les UCG. Le fonctionnement du réseau est alors le suivant.

Dans l'UCG aval de la panne, les signaux d'alarme fournis par l'UCG associée et par la boucle de secours sont analysés par le microprocesseur du module électronique analogue à celui de la figure 4. Ce dernier fournit des signaux de commande (liaison CD) du dispositif de commutation 27 pour connecter la boucle S à la boucle A par exemple. Plus précisément, le commutateur $27_2$ passe de la position 0 à la position 1 de sorte que la liaison $S_r$ est connectée à la liaison $A_e$ par l'intermédiaire du commutateur $27_2$, de la liaison $A'_r$ des répéteurs 11 de l'UCG en aval et de la liaison $A'_e$.

Dans l'UCG en amont de la panne, les signaux d'alarme fournis par l'UCG associée et par la boucle de secours (liaison $S_r$) sont analysés par le microprocesseur 25. Ce dernier fournit des signaux de commande (liaison CD) du sélecteur 28 pour ouvrir l'interrupteur $28_4$ et fermer l'un des interrupteurs $28_2$ ou $28_3$, par exemple $28_2$. Il en résulte que la boucle de secours est ouverte et que la boucle A est connectée à la boucle S (côté émission $S_e$) par l'intermédiaire de la liaison $A_r$, du commutateur $27_2$ en position 0, de la liaison $A'_r$, des répéteurs 11 de la liaison $A'_e$ et de l'interrupteur $28_2$ en position fermée.

Bien entendu, si la boucle B avait été choisie, le commutateur $27_1$ de l'UCG aval aurait passé en position 1, ce qui aurait connecté $S_r$ à $B_e$. Dans l'UCG amont, l'interrupteur $28_3$ aurait été fermé au lieu de l'interrupteur $28_2$ de sorte que la boucle B aurait été connectée à la boucle S.

Dans les UCG autres que celui en aval et celui en amont, les signaux d'alarme provenant de l'UCG associée et de la boucle de secours sont interprétés par le microprocesseur du module électronique associé. Il en résulte un signal de commande de fermeture de l'interrupteur $28_1$ et d'ouverture de l'interrupteur $28_4$ de sorte que la liaison $S_r$ est connectée par l'intermédiaire du circuit horloge 26 à la liaison $S_e$. La boucle S peut alors fonctionner de la même façon que la boucle A ou B à la condition que la boucle S comporte les mêmes équipements de transmission. C'est ainsi que dans le cas de boucles A, B et S réalisées à l'aide de fibres optiques il est prévu des coupleurs optiques identiques à l'entrée des liaisons $A_r$, $B_r$ et $S_r$ et à la sortie des liaisons $A_e$, $B_e$ et $S_e$.

Pour le retour du système à la configuration normale, lorsque la panne a été réparée, plusieurs manières de procéder peuvent être envisagées, toutes conduisant à remettre les dispositifs de commutation 27 et 28 à leur état normal indiqué sur la figure 4.

Le système a été décrit dans le cas particulier d'un réseau comportant deux boucles A et B auxquelles on ajoute, selon l'invention, une boucle de secours S. Il est clair que la boucle de secours S peut être mise en oeuvre dans des réseaux à une seule boucle ou plus de deux boucles.

Les dispositifs de commutation 27 et 28 ont été décrits sous une forme schématique mais il est clair qu'ils sont réalisés sous forme de composants électroniques ou opto-électroniques adaptés aux signaux à commuter.

ou B) de transmission reliant différentes Unités de Contrôle de Grappe UCG-3 à 8) auxquelles sont connectés différents abonnés du réseau et une deuxième boucle de transmission dite de secours (S) qui connecte les différentes UCG entre elles et présente un sens de transmission inverse de celui de la première boucle (A ou B), caractérisé en ce que la boucle de secours (S) comprend un module électronique 20) associé à chaque UCG (3 à 8) et une ligne de transmission reliant les différents modules électroniques et en ce que chaque module électronique comprend des moyens de commutation (27,28) qui permettent de connecter la première boucle (A ou B) à la boucle de secours lorsqu'une panne de la première boucle (A ou B) est détectée.

2. Réseau de communication selon la revendication 1, caractérisé en ce que les moyens de commutation comprennent une matrice de commutation (27) qui permet de connecter le côté émission (Ae ou Be) de la première boucle de transmission (A ou B) soit au côté réception (Ar ou Br) de ladite boucle en fonctionnement normal, soit au côté réception (Sr) de la boucle de secours (S) en cas de panne de la première boucle et un sélecteur (28) qui permet de connecter le côté émission (Se) de la boucle de secours (S) soit au côté réception (Sr) de ladite boucle en fonctionnement normal, soit au côté réception (Ar ou Br) de la première boucle de transmission (A ou B) par l'intermédiaire de la matrice de commutation (27) en cas de panne de ladite boucle (A ou B).

3. Réseau de communication selon la revendication 1 ou 2, caractérisé en ce que chaque module électronique comprend en outre des moyens d'analyse (25) de signaux d'alarme AL fournis par l'UCG associée et par les autres UCG du réseau par l'intermédiaire de la boucle de secours fonctionnant en télémesure, lesdits moyens d'analyse élaborant des signaux de commande (CD) des moyens de commutation (27,28).

4. Réseau de communication selon la revendication 3, caractérisé en ce que les moyens d'analyse 25 sont connectés à l'UCG associée par des liaisons directes qui transmettent les signaux d'alarme et par des liaisons d'abonnés.

## Revendications

1. Réseau de communication du type en anneau comportant au moins une première boucle (A

# FIG_1

# FIG_2

FIG_3

FIG_4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 244 775 (HITACHI)<br>* Colonne 1, lignes 13-27; colonne 3, lignes 16-23; colonne 4, lignes 48-56; colonne 6, lignes 41-53; colonne 9, lignes 34-40; colonne 11, lignes 43-48; figures 1,2,3 * | 1-3 | H 04 L 12/42 |
| A | | 2 | |
| X | EP-A-0 168 258 (FUJITSU)<br>* Page 3, lignes 11-16; page 3, lignes 36-37; page 5, lignes 8-15; page 9, lignes 12-28; figures 1,2,3 * | 1 | |
| A | | 3,4 | |
| X | PATENT ABSTRACTS OF JAPAN, vol. 7, no. 94 (E-171)[1239], 20 avril 1983; & JP-A-58 019 057 (HITACHI SEISAKUSHO K.K.)<br>* Tout le document * | 1,2 | |
| A | US-A-4 538 026 (YASUE)<br>* Colonne 2, lignes 51-58; colonne 3, ligne 64 - colonne 4, ligne 9 * | 1-4 | **DOMAINES TECHNIQUES RECHERCHES (Int. Cl.5)**<br><br>H 04 L |

Le présent rapport a été établi pour toutes les revendications

| Lieu de la recherche | Date d'achèvement de la recherche | Examinateur |
|---|---|---|
| LA HAYE | 30-01-1990 | DE LA FUENTE DEL AGUA P. |

EPO FORM 1503 03.82 (P0402)